# EUROPÄISCHE PATENTSCHRIFT

(11) **EP 2 507 110 B1**
(45) Veröffentlichungstag und Bekanntmachung des Hinweises auf die Patenterteilung: **11.01.2017**
(21) Anmeldenummer: 10782228.0
(22) Anmeldetag: 10.11.2010
(51) Int. Cl.: B62D 1/00, B26D 1/46, B26D 1/54, B26D 7/08, B23D 55/08

(54) **SCHAUMSTOFFSCHNEIDEMASCHINE**
FOAM CUTTTING MACHINE
DISPOSITIF POUR LA DÉCOUPE DE MOUSSE

(30) Priorität: 01.12.2009 DE 102009056446
(43) Veröffentlichungstag der Anmeldung: 10.10.2012
(73) Patentinhaber: Fecken-Kirfel GmbH & Co. KG, 52070 Aachen (DE)
(72) Erfinder: TILLMANN, Michael, 52146 Würselen (DE); KERN, Hans-Dieter, 52066 Aachen (DE)
(74) Vertreter: dompatent von Kreisler Selting Werner - Partnerschaft von Patent- und Rechtsanwälten mbB
(86) Internationale Anmeldenummer: PCT/EP2010/067234
(87) Internationale Veröffentlichungsnummer: WO 2011/067086

(56) Entgegenhaltungen:
- EP-A1- 1 782 905
- DE-A1- 2 145 062
- GB-A- 2 148 175

## Beschreibung

Die Erfindung betrifft eine Schaumstoffschneidemaschine mit einem endlosen bandförmigen Messer.

Zum Schneiden von Schaumstoffen werden unter anderem Maschinen benutzt, die mit einem endlosen Bandmesser arbeiten, das über eine große Länge von z.B. ein bis drei Metern frei läuft. Dies bedeutet, dass das Bandmesser nicht seitlich oder nach hinten abgestützt ist. Solche Maschinen können mit horizontal oder vertikal ausgerichtetem Bandmesser ausgerüstet sein.

Beim Schneiden von schweren oder stauchharten Schaumstoffen beispielsweise aus Polyurethan, Polyethylen oder anderen Materialien ist insbesondere im Konturschnitt ein Schleppfehler des Bandmessers über die Arbeitsbreite zu beobachten. Dieser Schleppfehler ist aufgrund der großen unabgestützten Länge des Bandmessers in einem bis zu 2,5m breiten Block im Prinzip unvermeidbar. Je nach den physikalischen Eigenschaften des Materials, sowie je nach den Schneidparametern wie Schneidgeschwindigkeit, Messerschärfe, Messerspannung, aber auch abhängig von der Konturform, kann dieser Schleppfehler in der Mitte des Blockes zu nicht tolerierbaren Abweichungen von der Sollkurve des zu schneidenden Teils führen.

Es sind Maschinen bekannt, bei denen das Bandmesser in der Mitte des Schneidbereiches oder an unterschiedlichen Positionen durch einen mitfahrenden Mittelarm abgestützt wird. Eine solche Einrichtung kann jedoch nur dann eingesetzt werden, wenn zwei Schaumstoffblöcke nebeneinander so positioniert werden, dass z.B. zwei kleinere Matratzen gleichzeitig nebeneinander geschnitten werden oder nur ein schmaler Block bearbeitet wird.

Um des Weiteren den Schleppfehler im breiten Schaumstoffblock zu vermindern, werden oftmals Bandmesser mit speziellen Geometrien eingesetzt. Hierzu zählen z.B. Bandmesser mit gezahnter Schneidkante oder solche mit wellenförmig oder kalottenförmig geschliffener Schneidkante (ähnlich der eines Brotmessers). Diesen Schneidmedien wohnt jedoch der Nachteil inne, dass sie aufgrund ihrer Formgebung nicht nachgeschliffen werden können. Da die Messer im Verlauf ihrer Lebensdauer durch den Schneidvorgang im Material stumpf werden, muss die Schneidgeschwindigkeit aufgrund nicht vorhandener Nachschleifmöglichkeit herabgesetzt werden, bzw. es muss mit einem über die Zeit wachsendem Schleppfehler gerechnet werden. Nur mit einem ständig nachgeschliffenen Bandmesser kann über die gesamte Lebensdauer des Bandmessers eine gleichbleibende Qualität des Schnitts, gepaart mit stets gleichbleibender Schneidgeschwindigkeit erreicht werden. Ein gezahntes Bandmesser kann zwar geschliffen werden, jedoch werden dabei die Zähne im vorderen Bereich mit der Zeit abgeschliffen, was zu einer Verringerung der Zahnwirkung führt oder dazu, dass die Zähne sogar im weiteren Verlauf ganz abgeschliffen werden. Daher werden gezahnte Bandmesser üblicherweise gar nicht geschliffen oder nur kurz angeschliffen, was zu den oben beschriebenen negativen Auswirkungen nach längerer Laufzeit führt.

Auch können gezahnte oder wellenförmig/kalottenförmig geschliffene Messer nicht mit derselben hohen Spannung betrieben werden, da je nach Herstellungsprozess dieser Messer z.B. die Kerbwirkung einer in den Bandmesserstahl eingebrachten Zahnung einen Bruch bei höheren Spannungen begünstigt. Auch verringert der geringere Querschnitt eines gezahnten Messers die mögliche Vorspannung. Ein erhöhter Schleppfehler ist durch die geringere Vorspannung des Messers vorprogrammiert.

Ferner sind oszillierende Bandmesser bekannt, bei denen im Schneidbereich ein kurzes Stück Messer (meist ein gezahntes Messer oder ein Schneiddraht) mit einer Oszillationsvorrichtung in longitudinale Messerrichtung hin und her angetrieben wird. Aufgrund der Maschinengeometrie sind aber auch diese Messer nicht schleifbar. Daher ist meist die Schneidgeschwindigkeit bei diesen Maschinen sehr gering.

Weiterhin sind Pendelhubstichsägen bekannt, bei denen neben der Hubbewegung- senkrecht zur Schnittrichtung - der vertikal auf und ab bewegten Säge wahlweise eine horizontale Pendelbewegung - in Schnittrichtung - zugeschaltet werden kann, die dafür sorgt, dass sich die Säge in der Abwärtsbewegung (im Sägevorlauf) nach vorne bewegt, um sich dabei tiefer in das zu schneidende Material einzugraben. Dies führt je nach Material zu einer wechselnden Spangröße im Schnitt, zu einem erhöhten Vorwärtsdrang der Säge, d.h. einer besseren Bearbeitungsmöglichkeit mit weniger Kraftaufwand für den Bediener und letztendlich zu einem besseren Schneidergebnis. In der Aufwärtsbewegung wird die Säge leicht nach hinten geführt, um die anfallenden Sägespäne abführen zu können, bzw. Platz für deren Auswurf aus dem Sägespalt zu schaffen.

Eine Bandsäge, bei der das Sägeblatt zur Spanabführung vibriert, ist aus der EP 1 782 905 A1 bekannt.

Eine Schaumstoffschneidemaschine nach dem Oberbegriff von Anspruch 1 ist aus der DE 21 45 602 A1 der Anmelderin bekannt.

Der Erfindung liegt die Aufgabe zugrunde, eine Schaumstoffschneidemaschine zu schaffen, bei der mit einem endlosen bandförmigen Messer das Schneidverhalten einer wellenförmigen Messerkante nachgebildet wird, wobei das Messer jedoch schleifbar ist.

Die erfindungsgemäße Schaumstoffschneidemaschine ist durch die Merkmale des Patentanspruchs 1 definiert und das erfindungsgemäße Verfahren durch die Merkmale des Patentanspruchs 6.

Erfindungsgemäß weist mindestens eine Messerführung eine Schwingvorrichtung auf, die das Messer in der Messerebene und senkrecht zur Messerkante schwingend antreibt. Auf diese Weise wird dem Bandmesser neben der longitudinalen Laufbewegung eine gleichzeitige transversale Querbewegung im Sinne einer Pendelbewegung hinzugefügt. Dabei ist die resultierende Bewegung des Bandmessers, bezogen auf einen beliebigen Punkt im Schaumstoffmaterial, vergleichbar mit der Bewegung der Vorderkante eines wellenförmig geschliffenen Bandmessers. Relativ zu dem Schaumstoffmaterial führt das entlang des Schneidbereichs bewegte Messer eine wellenförmig schwingende Bewegung aus.

Die Erfindung vereinigt die Vorteile eines wellenförmig gestalteten Messers, nämlich einen feineren Schnitt und einen niedrigeren Schneidwiderstand und damit einen verringerten Schleppfehler, mit den Vorteilen eines glatten Bandmessers, das sich stärker spannen lässt und ständig nachgeschliffen werden kann.

Die Erfindung ist vorzugsweise bei Konturschneidemaschinen anwendbar, kann jedoch auch bei anderen Typen von Schneidemaschinen eingesetzt werden, bei denen das Bandmesser im horizontalen, vertikalen oder schräg stehenden Arbeitsbereich frei läuft.

Da sich das im Schneidebereich frei laufende Bandmesser nur an den seitlich zum Materialblock liegenden Messerführungen führen und beeinflussen lässt, werden die steuerbare Messerverdrehung und die Schwingbewegung an diesen Stellen eingebracht. Die Erfindung beruht auf einer schwingenden Transversalbewegung des Messers durch einen Schwingungserreger, der an der Messerführung (Verdrehführung) des Bandmessers positioniert ist, also an den beiden Stellen, an denen das freilaufende Bandmesser die Führung verlässt und in das Schaumstoffmaterial eintaucht, bzw. an denen das Bandmesser das Schaumstoffmaterial verlässt und wieder in die Führung eintaucht.

Vorzugsweise ist vorgesehen, dass beide Messerführungen Schwingvorrichtungen aufweisen, die das Messer in der Messerebene und senkrecht zur Messerkante schwingend antreiben. Die Schwingvorrichtungen können synchronisiert, d.h. zeitlich aufeinander abgestimmt sein, so dass sie phasengleich schwingen. Eine solche Synchronisierung ist jedoch wegen der großen Länge des Schneidbereichs von etwa ein bis drei Metern häufig nicht notwendig.

Die besten Ergebnisse haben sich gezeigt, wenn die Schwingungsfrequenz so bemessen ist, dass die Wellenlänge, also die örtliche Auswirkung der Schwingung in Längsrichtung des Bandmessers, zwischen 20mm und 100mm beträgt. Dabei wird die Amplitude so gewählt, dass sie zwischen einem Viertel und dem Doppelten der Länge der Messerfase beträgt. Die Messerfase ist die Abschrägung des Bandmessers, die in der Messerkante endet.

Gemäß einer bevorzugten Ausführungsform der Erfindung ist vorgesehen, dass mindestens eine Schwingvorrichtung eine exzentrisch gelagerte Rückenrolle ist. Diese Rückenrolle stützt die rückwärtige Messerkante ab. Durch ihre Drehbewegung wird das Bandmesser in eine Transversalschwingung (quer zu seiner Längsrichtung) versetzt. Dabei drückt sich das Messer durch den Schneiddruck bzw. die Einstellung/-schränkung der Messerscheiben so an die Rückenrolle, dass ein ständiger Kontakt und damit eine stete Schwingungserregung gegeben sind. Die exzentrische Rückenrolle benötigt keinen eigenen Antrieb, da sie durch das vorbeilaufende Messer angetrieben wird. Die Schwingungsfrequenz wird durch den Durchmesser der Rückenrolle bestimmt und die Amplitude durch die Größe der Exzentrizität.

Es können auch andere Arten von Schwingvorrichtungen benutzt werden, beispielsweise ein Piezoschwinger oder ein elektromagnetischer Schwinger.

Im Folgenden werden unter Bezugnahme auf die Zeichnungen Ausführungsbeispiele der Erfindung näher erläutert. Es zeigen:
- Fig. 1: eine Frontansicht einer horizontalen Konturschneidemaschine, wobei ausschließlich das Schneidaggregat dargestellt ist,
- Fig. 2: eine schematische Darstellung des Schneidebereichs des Bandmessers mit den beiden Messerführungen unter Angabe der Schwingungsrichtungen,
- Fig. 3: in vergrößertem Maßstab eine der Messerführungen mit darin vorhandener Schwingvorrichtung und
- Fig. 4: eine alternative Ausführungsform zu Fig. 3 mit einer anderen Schwingvorrichtung.

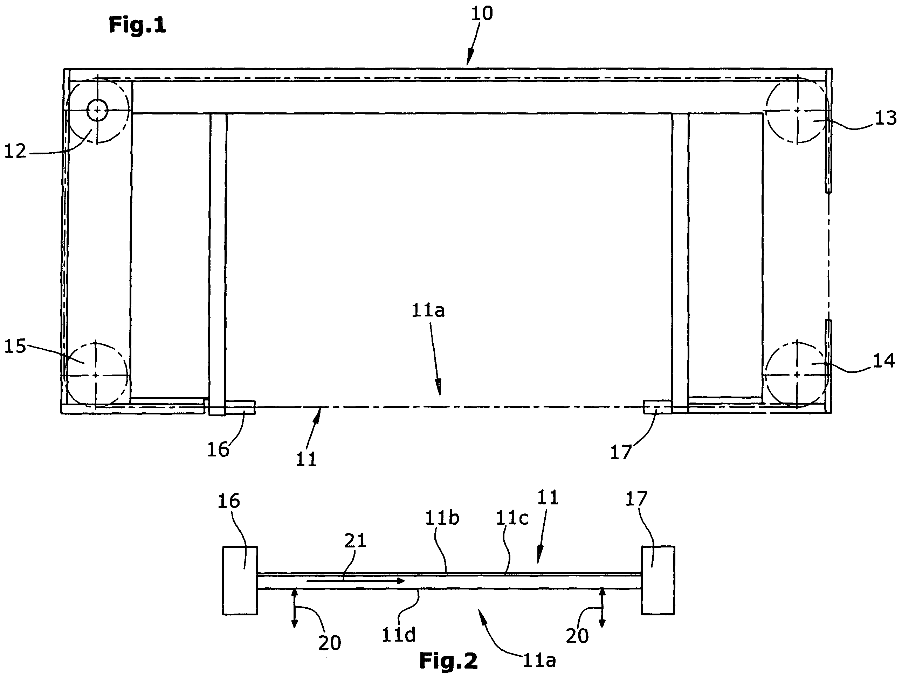

In Fig. 1 ist eine Frontansicht einer Schaumstoffschneidemaschine dargestellt, und zwar aus der Sicht eines ankommenden Schaumstoffblockes, der mit einem Bandmesser der Schneidemaschine geschnitten werden soll. Die Schneidemaschine weist einen rechteckigen starren Rahmen 10 auf, in dem das bandförmige flexible Messer 11 entlang einer Bahn umläuft. Das Messer 11 ist ein endloses Messer, d.h. es bildet eine geschlossene Schleife. An den Ecken des Rahmens 10 sind Messerscheiben 12, 13, 14, 15 drehbar gelagert, um die das bandförmige Messer 11 umläuft. Eine der Messerscheiben ist angetrieben, wodurch das Messer entlang der Bahn bewegt wird.

Im unteren Abschnitt der Bahn bildet das Messer 11 einen Schneidbereich 11a, durch den der zu schneidende Schaumstoff auf einem Förderer hindurch transportiert wird. In dem Schneidbereich 11a läuft das Messer ohne Führung bzw. Abstützung. Der Schneidbereich 11a ist durch Messerführungen 16, 17 begrenzt. Diese sind um die Längsachse des bandförmigen Messers gesteuert drehbar, um den Anstellwinkel des Messers zu verändern bzw. um der Konturlinie zu folgen.

Fig. 2 zeigt eine Draufsicht auf das Messer 11 und die Messerführungen 16, 17. Das bandförmige Messer 11, das in dem Schneidbereich 11a ungeführt frei läuft, hat eine scharfe vordere Messerkante 11b und eine stumpfe rückwärtige Messerkante 11d. Der spitze vordere Bereich, der sich an die Messerkante 11b anschließt, wird als Messerfase 11c bezeichnet.

Erfindungsgemäß enthalten die Messerführungen 16, 17 Schwingvorrichtungen, die das Messer 11 in Schwingungen versetzen, die durch die Doppelpfeile 20 angedeutet sind. Die Schwingungen verlaufen in der Messerebene und senkrecht zu den beiden Messerkanten. Durch die Laufbewegung 21 des Messers und die Schwingbewegungen wird in Bezug auf das Werkstück die Wirkung eines wellenförmigen Messers erreicht, obwohl die Messerkante 11b des verwendeten Messers gerade ist.

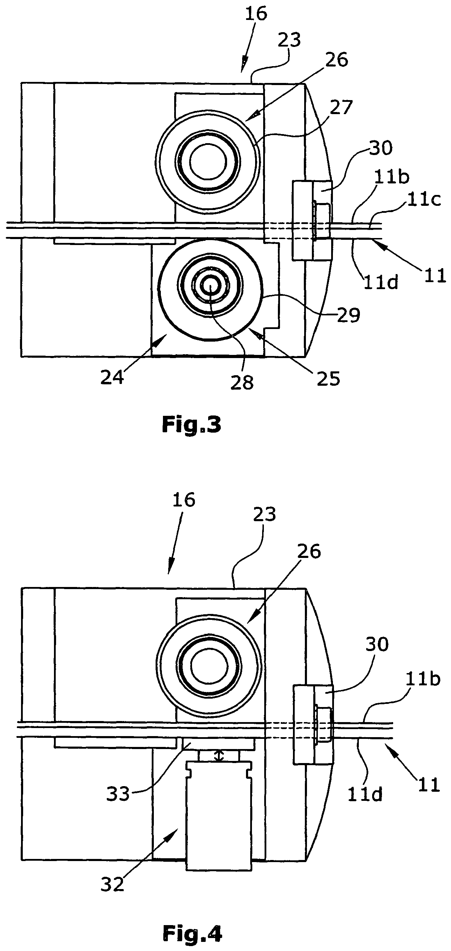

Fig. 3 zeigt schematisch den inneren Aufbau der Messerführung 16. Diese weist in einem Gehäuse 23, durch welches das Messer 11 hindurch läuft, eine Rückenrolle 25 auf, die frei drehbar gelagert ist und mit ihrer Umfangsfläche die rückwärtige Messerkante 11d des Messers 11 abstützt. Der Rückenrolle gegenüberliegend ist eine Führungsrolle 26 gelagert.

Die Rückenrolle 25 ist auf einer Achse 28 gelagert und ihre Umfangsfläche 29 ist exzentrisch zu der Achse 28. Dadurch wird das Messer 11, das durch die Rückenrolle 25 entgegen der Schneidvorrichtung abgestützt wird, in Schneidrichtung schwingend vor und zurück bewegt. Die Stützrolle 25 bildet die Schwingvorrichtung 24. Die Schwingungsamplitude wird durch die Größe der Exzentrizität bestimmt. Die Wellenlänge der Schwingung wird durch den Umfang der Rückenrolle 25 bestimmt.

Das Messer 11 läuft durch einen Führungsspalt 30, der um die Längsachse des Messers herum gesteuert drehbar ist, um den Anstellwinkel des Messers zu verändern.

Eine andere Ausführungsform der Schwingvorrichtung 24 ist in Fig. 4 dargestellt. Die Schwingvorrichtung weist hier einen piezoelektrischen oder pneumatischen oder magnetischen Schwinger 32 auf, der ein Stützelement 33 schwingend rechtwinklig zur rückwärtigen Messerkante 11d antreibt. Das Stützelement 33 stützt die rückwärtige Messerkante 11d ab. Die Anlage der Messerkante an dem Stützelement wird durch den Schneiddruck gewährleistet, mit dem das Werkstück gegen das Messer drückt. Bei einer elektrisch gesteuerten Schwingvorrichtung 32 können Schwingfrequenz und Schwingamplitude beliebig verändert werden, ohne Umrüstungen an der Maschine durchzuführen.

## Patentansprüche

1. Schaumstoffschneidemaschine mit einem endlosen bandförmigen Messer (11), das eine scharfe vordere Messerkante (11b) und eine stumpfe rückwärtige Messerkante (11d) aufweist, und entlang einer Bahn um Messerscheiben (12,13,14,15) umläuft, wobei die Bahn einen Schneidbereich (11a) aufweist, in dem Messerführungen (16,17) angeordnet sind,
**dadurch gekennzeichnet, dass**
mindestens eine der Messerführungen (16,17) eine Schwingvorrichtung (24) aufweist, die das Messer (11) in der Messerebene und senkrecht zu den Messerkanten schwingend antreibt.

2. Schaumstoffschneidemaschine nach Anspruch 1, **dadurch gekennzeichnet, dass** beide Messerführungen Schwingvorrichtungen aufweisen, die das Messer in der Messerebene und senkrecht zu den Messerkanten schwingend antreiben.

3. Schaumstoffschneidemaschine nach Anspruch 1 oder 2, **dadurch gekennzeichnet, dass** die mindestens eine Schwingvorrichtung (24) eine exzentrisch gelagerte Rückenrolte (25) ist.

4. Schaumstoffschneidemaschine nach einem der Ansprüche 1 - 3, **dadurch gekennzeichnet, dass** die mindestens eine Schwingvorrichtung (24) einen Piezoschwinger, einen pneumatischen oder einen elektromagnetischen Schwinger aufweist.

5. Schaumstoffschneidemaschine nach Anspruch 3, **dadurch gekennzeichnet, dass** die Rückenrolle (25) eine durch das Messer (11) angetriebene mitlaufende Rolle ist.

6. Verfahren zum Schneiden eines Schaumstoffblockes mit einem endlosen bandförmigen Messer, das eine scharfe vordere Messerkante und eine stumpfe rückwärtige Messerkante aufweist,
**dadurch gekennzeichnet, dass**
das Messer in der Messerebene und senkrecht zu den Messerkanten schwingend angetrieben wird.

## Claims

1. A foam material cutting machine comprising an endless band-shaped knife (11) having a sharp front knife edge (11b) and a blunt rear knife edge (11d) and circulating along a trajectory around knife discs (12, 13, 14, 15), said trajectory including a cutting region (11a) in which knife guides (16, 17) are arranged,
**characterized in that**
at least one of said knife guides (16, 17) comprises an oscillation device (24) driving the knife (11) oscillating in the knife plane and perpendicularly to the knife edges.

2. The foam material cutting machine of claim 1, **characterized in that** both knife guides comprise oscillation devices driving the knife oscillating in the knife plane and perpendicularly to the knife edges.

3. The foam material cutting machine of claim 1 or 2, **characterized in that** said at least one oscillation device (24) is an eccentrically supported back roller (25).

4. The foam material cutting machine of one of claims 1 - 3, **characterized in that** said at least one oscillation device (24) comprises a piezo-type oscillator, a pneumatic oscillator or an electromagnetic oscillator.

5. The foam material cutting machine of claim 3, **characterized in that** the back roller (25) is an idling roller driven by the knife (11).

6. A method for cutting a foam material block using an endless band-shaped knife having a sharp front knife edge and a blunt rear knife edge,
**characterized in that**
the knife is driven oscillating in the knife plane and perpendicularly to the knife edges.

## Revendications

1. Machine de découpe de matière alvéolaire comprenant une lame sans fin (11) en forme de bande qui comporte un bord avant tranchant (11b) et un bord arrière non tranchant (lld), et qui circule le long d'un chemin autour de poulies de lame (12, 13, 14, 15), le chemin comportant une zone de coupe (11a) dans laquelle des guides de lame (16, 17) sont disposées,
**caractérisée en ce que**
au moins un des guides de lame (16, 17) comporte un dispositif vibrant (24) qui entraîne la lame (11) de façon à ce qu'elle vibre dans le plan de la lame et perpendiculairement aux bords de la lame.

2. Machine de découpe de matière alvéolaire selon la revendication 1, **caractérisée en ce que** les deux guides de lame comportent des dispositifs vibrants qui entraînent la lame de façon à ce qu'elle vibre dans le plan de la lame et perpendiculairement aux bords de la lame.

3. Machine de découpe de matière alvéolaire selon la revendication 1 ou 2, **caractérisée en ce que** l'au moins un dispositif vibrant (24) est un rouleau arrière (25) monté de façon excentrique.

4. Machine de découpe de matière alvéolaire selon l'une des revendications 1 à 3, **caractérisée en ce que** l'au moins un dispositif vibrant (24) comprend un vibrateur piézoélectrique, un vibrateur pneumatique ou un vibrateur électromagnétique.

5. Machine de découpe de matière alvéolaire selon la revendication 3, **caractérisée en ce que** le rouleau arrière (25) est un rouleau fou entraîné par la lame (11).

6. Procédé de découpage d'un bloc de matière alvéolaire comprenant une lame sans fin en forme de bande qui comporte un bord avant tranchant et un bord arrière non tranchant,
**caractérisé en ce que**
la lame est entraînée de façon à vibrer dans le plan de la lame et perpendiculairement aux bords de la lame.
